(19) Europäisches Patentamt
European Patent Office
Office européen des brevets

(11) **EP 1 902 233 B1**

(12) **EUROPÄISCHE PATENTSCHRIFT**

(45) Veröffentlichungstag und Bekanntmachung des Hinweises auf die Patenterteilung:
**20.11.2013 Patentblatt 2013/47**

(21) Anmeldenummer: 06743166.8

(22) Anmeldetag: **16.06.2006**

(51) Int Cl.:
*F16H 7/02* *(2006.01)*   *F01L 1/02* *(2006.01)*

(86) Internationale Anmeldenummer:
**PCT/EP2006/005774**

(87) Internationale Veröffentlichungsnummer:
**WO 2007/003263 (11.01.2007 Gazette 2007/02)**

(54) **UMSCHLINGUNGSTRIEB**

CONTINUOUS BELT DRIVE

TRANSMISSION À VARIATION CONTINUE

(84) Benannte Vertragsstaaten:
**DE FR GB HU**

(30) Priorität: **05.07.2005 DE 102005031297**
**11.08.2005 US 707291 P**

(43) Veröffentlichungstag der Anmeldung:
**26.03.2008 Patentblatt 2008/13**

(73) Patentinhaber: **Schaeffler Technologies AG & Co. KG**
**91074 Herzogenaurach (DE)**

(72) Erfinder: **PFLUG, Rainer**
**91560 Heilsbronn (DE)**

(56) Entgegenhaltungen:
WO-A-03/046413    WO-A-2005/026583
DE-A1-102004 025 936    GB-A- 449 504
US-A- 596 289

**Beschreibung**

**Gebiet der Erfindung**

Die Erfindung betrifft einen Umschlingungstrieb mit einem Umschlingungsmittel, zumindest einer antreibenden Zugmittelscheibe und einer angetriebenen Zugmittelscheibe, wobei zumindest eine der Zugmittelscheiben unrund ausgebildet ist.

**Hintergrund der Erfindung**

Insbesondere in Kraftfahrzeugen werden Riemen- oder Kettentriebe verwendet, bei denen eine Kurbelwelle die Nockenwellen einer Verbrennungskraftmaschine antreibt, welche die Einlass- bzw. Auslassventile derselben öffnen und schließen.

Riemen- oder Kettentriebe sind aufgrund von Drehmomentschwankungen bzw. Winkelgeschwindigkeits- und Drehzahländerungen während des Betriebes mechanischen Schwingungsanregungen unterworfen, die ihrerseits den Riemen- bzw. Kettentrieb belasten. Derartige Schwingungen führen in Resonanzbereichen zudem unvorteilhaft zu hörbaren Geräuschen. Damit verbunden sind erhöhte Reibungskräfte, welche die Lebensdauer des Umschlingungstriebes sowie dessen Wirkungsgrad negativ beeinträchtigen. Ferner steigt die Fehleranfälligkeit an und der Fahrkomfort z. B. in einem Kraftfahrzeug nimmt ab.

Um diesem Problem wirkungsvoll zu begegnen, sind unterschiedliche Maßnahmen bekannt geworden. So ist es bereits bekannt, zumindest eine antreibende und/oder abtreibende Zugmittelscheibe unrund auszubilden und/oder exzentrisch zu lagern. Durch diese Maßnahme wird eine Verstimmung des Umschlingungstriebes mittels einer zusätzlichen Ungleichförmigkeit erzeugt, wodurch kritische Resonanzbereiche in einen nicht störenden Bereich verschoben werden (DE 195 20 508 A1, DE 202 20 367 U1).

Des Weiteren ist es aus der DE 195 20 508 A1 bekannt, die unrund ausgebildeten und/oder exzentrisch gelagerten Räder bzw. Zugmittelscheiben mit einem Riemen, insbesondere Zahnriemen zu kombinieren, der seinerseits mit einer unterschiedlichen Längselastizität ausgebildet ist. Weiter wird in dieser Druckschrift vorgeschlagen, ein an sich bekanntes und im Leertrum des Umschlingungstriebes angeordnetes federbelastetes Spannrad unrund auszubilden und/oder exzentrisch zu lagern, wodurch ebenfalls eine Resonanzverschiebung realisierbar sein soll.

Ferner wird mit der unveröffentlichten deutschen Patentanmeldung 10 2004 025 936.4 ein Umschlingungstrieb für eine Brennkraftmaschine mit einem als Riemen oder Kette ausgebildeten Umschlingungsmittel vorgeschlagen, welches über Antriebs- bzw. Abtriebsräder der Kurbelwelle und mindestens einer Nockenwelle der Brennkraftmaschine und/oder anzutreibender Nebenaggregate geführt ist. Im Wesentlichen ist hierbei vorgesehen, zumindest eines der An- bzw. Abtriebsräder oder ein Umlenkrad unrund bzw. exzentrisch auszubilden und/oder mindestens zwei Spannrollen vorzusehen, wobei eine dieser Spannrollen mit einer Dämpfungseinrichtung versehen ist oder beide Dämpfungseinrichtung miteinander gekoppelt sind.

In der DE 202 20 367 U1 wird zudem vorgeschlagen, einem schwankenden Belastungsdrehmoment bzw. der Schwingungsanregung durch einen Verbrennungsmotor in einem Umschlingungstrieb dadurch zu begegnen, dass der Umschlingungstrieb eine Zugmittelscheibe mit einem unrunden Profil aufweist, wobei die Winkelposition der vorstehenden und rückstehenden Abschnitte des unrunden Profils relativ zu der Winkelposition der zweiten Zugmittelscheibe sowie das Ausmaß einer Exzentrizität des unrunden Profils derart ausgebildet sind, dass das unrunde Profil ein entgegengesetztes schwankendes und korrigierendes Drehmoment an die zweite Zugmittelscheibe anlegt, welches seinerseits das schwankende Belastungsdrehmoment verringert oder im Wesentlichen aufhebt. Es wird demnach versucht, über die Winkelposition der unrunden Zugmittelscheibe zur zweiten runden Zugmittelscheibe sowie durch das Ausmaß der Exzentrizität besonderen Einfluss auf die Schwingungstilgung zu nehmen.

Darüber hinaus sind aus der US 4,865,577 unrunde Kettentriebe mit unrunden Kettenrädern bekannt. Um Schwankungen im Kettendurchhang zu minimieren, wird im Wesentlichen vorgeschlagen, die Räder so zueinander anzuordnen, dass die zueinander korrespondierenden Ablauf- und Einlaufpunkte der Kette an den beiden Rädern nicht in einer gemeinsamen Tangente liegen.

Eine Umschlingungstrieb der eingangs genannten Art welches der Oberbegriff des ersten Anspruchs offenbart, ist auch aus der US 596 289 A bekannt.

Sicherlich sind mit diesen bekannten Maßnahmen bestimmte, sich vorteilhaft auf den Betrieb und den Wirkungsgrad des Umschlingungstriebes sowie den Fahrkomfort eines einen solchen Umschlingungstrieb aufweisenden Fahrzeugs auswirkende Resonanzverschiebung erzielbar. Ungeachtet dessen gehen diese Maßnahmen noch mit gewissen weiteren Aufwendungen einher, insbesondere dann, wenn diese beispielsweise mit an sich bekannten so genannten Nockenwellentilgern und/oder Riemen mit hochwertigen Cords kombiniert werden.

Demgemäß ist die Fachwelt bestrebt, weitere vorteilhafte Lösungen zu finden, um dem genannten Problem der Schwingungsanregung wirkungsvoll und kostengünstig zu begegnen.

## Aufgabe der Erfindung

Der Erfindung liegt somit die Aufgabe zugrunde, eine andere, sich besonders vorteilhaft vom Stand der Technik abgrenzende Lösung zur Verringerung von Schwingungen an einem Umschlingungstrieb zu schaffen, die insbesondere einfach und kostengünstig realisierbar ist.

## Zusammenfassung der Erfindung

Der Erfindung liegt die Erkenntnis zugrunde, dass über die Wahl eines definierten Umschlingungswinkels $\alpha$ eines Umschlingungsmittels an zumindest einer unrund ausgebildeten Zugmittelscheibe besonders vorteilhaft Einfluss auf das Schwingungsverhalten des Umschlingungsmittels und demgemäß des Umschlingungstriebes genommen werden kann.

Die Erfindung betrifft gemäß den Merkmalen des Anspruchs 1 demnach einen Umschlingungstrieb mit einem Umschlingungsmittel, zumindest einer antreibenden Zugmittelscheibe und einer angetriebenen Zugmittelscheibe, wobei zumindest eine der Zugmittelscheiben unrund ausgebildet ist. Der Umschlingungswinkel $\alpha$ und die Kontaktlänge des Umschlingungsmittels an der zumindest einen unrund ausgebildeten Zugmittelscheibe sind derart eingestellt, dass diese in jeder Drehstellung der unrunden Zugmittelscheibe nahezu konstant sind. Die unrunde Zugmittelscheibe soll als Zugmittelscheibe

- dritter Ordnung mit einem Umschlingungswinkel von vorzugsweise $\alpha=120°$ oder einem ganzzahligen Vielfachen desselben;
- vierter Ordnung mit einem Umschlingungswinkel $\alpha=90°$ oder einem ganzzahligen Vielfachen desselben, vorzugsweise $\alpha=180°$;
- fünfter Ordnung mit einem Umschlingungswinkel $\alpha=72°$ oder einem ganzzahligen Vielfachen desselben, vorzugsweise $\alpha=144°$

oder

- sechster Ordnung mit einem Umschlingungswinkel $\alpha=60°$ oder einem ganzzahligen Vielfachen desselben, vorzugsweise $\alpha=120°$

ausgebildet sein.

Im Besonderen hat es sich an einem Umschlingungstrieb, welcher die Kurbelwelle mit der Nockenwelle einer Drei-Zylinder-Verbrennungskraftmaschine verbindet, als vorteilhaft erwiesen, wenn die Zugmittelscheibe an der Nockenwelle als Zugmittelscheibe dritter Ordnung (Dreieckform) mit einem Umschlingungswinkel von $\alpha=120°$ oder einem ganzzahligen Vielfachen desselben, vorzugsweise jedoch mit einem Umschlingungswinkel von $\alpha=120°$ unrund und die Zugmittelscheibe der Kurbelwelle kreisförmig ausgebildet sind.

Für eine Fünf-Zylinder-Verbrennungskraftmaschine sollte die Zugmittelscheibe der Nockenwelle zur Realisierung eines erfindungsgemäßen Effekts als Zugmittelscheibe fünfter Ordnung (Fünfeckform) mit einem Umschlingungswinkel von $\alpha=72°$ oder einem ganzzahligen Vielfachen desselben, vorzugsweise jedoch mit einem Umschlingungswinkel von $\alpha=144°$ ausgebildet sein, und die Zugmittelscheibe der Kurbelwelle sollte kreisförmig ausgebildet sein.

Dagegen ist für eine Sechs-Zylinder-Verbrennungskraftmaschine die Zugmittelscheibe der Nockenwelle als Zugmittelscheibe sechster Ordnung (Sechseckform) mit einem Umschlingungswinkel von $\alpha=60°$ oder einem ganzzahligen Vielfachen desselben, vorzugsweise jedoch mit einem Umschlingungswinkel von $\alpha=120°$ vorzusehen, oder die Zugmittelscheibe der Kurbelwelle ist als Zugmittelscheibe dritter Ordnung (Dreieckform) mit einem Umschlingungswinkel von $\alpha=120°$ oder einem ganzzahligen Vielfachen desselben, vorzugsweise jedoch mit einem Umschlingungswinkel von $\alpha=120°$ auszubilden.

Die vorgeschlagene Lösung eines Umschlingungstriebes hat im Hinblick auf herkömmliche Umschlingungstriebe den wesentlichen Vorteil, dass dieser einfach und kostengünstig zu realisierbar sowie hinsichtlich der Verringerung von Schwingungen äußerst wirkungsvoll ist. Des Weiteren lassen sich die vorgeschlagenen Maßnahmen am Umschlingungstrieb auch vorteilhaft mit an sich bekannten und oben bereits diskutierten Maßnahmen kombinieren, um den gewünschten Effekt noch weiter zu verbessern.

## Kurze Beschreibung der Zeichnungen

Die Erfindung wird im Folgenden anhand der beiliegenden Zeichnungen mit Hilfe einiger bekannter Ausführungsformen näher erläutert. Darin zeigt

Fig. 1    einen Umschlingungstrieb in der einfachsten Ausgestaltung mit einer antreibenden Zugmittelscheibe und einer angetriebenen Zugmittelscheibe (Stand der Technik),

Fig. 2    die zumindest eine unrund ausgebildete Zugmittelscheibe eines herkömmlichen Umschlingungstriebes in einer ersten Drehstellung (Stand der Technik),

Fig. 3    die Zugmittelscheibe gemäß Fig. 2 in einer zweiten Drehstellung (Stand der Technik),

Fig. 4    eine unrund ausgebildete Zugmittelscheibe eines Umschlingungstriebes in einer ersten Drehstellung (Stand der Technik), und

Fig. 5    die Zugmittelscheibe gemäß Fig. 4 in einer zweiten Drehstellung (Stand der Technik).

## Detaillierte Beschreibung der Zeichnungen

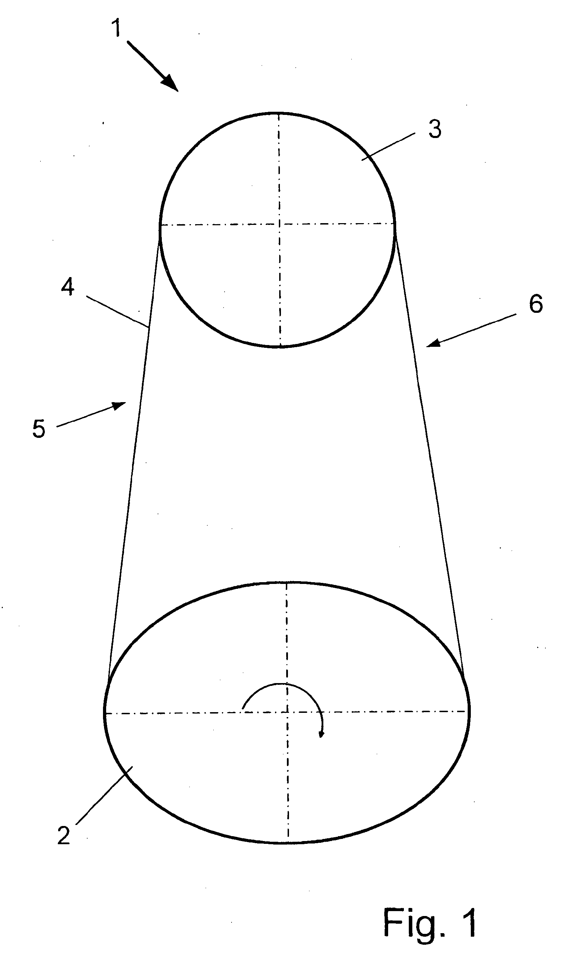

Der in Fig. 1 sehr schematisch dargestellte Umschlingungstrieb 1 weist in der einfachsten denkbaren Ausgestaltung eine antreibende Zugmittelscheibe 2 und eine angetriebene Zugmittelscheibe 3 auf, die von einem endlosen Umschlingungsmittel 4 als Drehmomentübertragungsmittel umschlungen sind. Als Umschlingungsmittel 4 bieten sich sowohl eine Kette als auch ein Riemen, vorzugsweise ein Zahnriemen an.

Stellt dieser Umschlingungstrieb 1 beispielsweise den Umschlingungstrieb einer nicht näher dargestellten Verbrennungskraftmaschine dar, wäre die Zugmittelscheibe 2 mit der antreibenden Kurbelwelle der Verbrennungskraftmaschine und die Zugmittelscheibe 3 mit der getriebenen Nockenwelle derselben wirkverbunden.

Wie der Fig. 1 weiter zu entnehmen ist, ist die Zugmittelscheibe 2 in an sich bekannter Art und Weise unrund, vorliegend als Zugmittelscheibe 2 zweiter Ordnung ausgebildet, welches einer Ellipsenform entspricht. Schon diese Maßnahme alleine kann, wie oben bereits erläutert, sich in bestimmtem Maße auf eine gewünschte Schwingungsreduzierung auswirken, indem ursächlich von der Verbrennungskraftmaschine bzw. deren Drehmomentschwankungen bzw. Winkelgeschwindigkeits- und Drehzahländerungen hervorgerufene mechanische Schwingungsanregungen des Umschlingungstriebes 1 mittels zusätzlich erzeugter Verstimmungen  des Umschlingungstriebes, resultierend aus der besagten unrunden Ausbildung zumindest einer Zugmittelscheibe 2, vorteilhaft überlagert und gemindert werden. In der Praxis hat sich jedoch gezeigt, dass die daraus resultierende Schwingungsreduzierung noch nicht ausreichend ist und einer Verbesserung bedarf.

In Untersuchungen wurde nunmehr gefunden, dass über die Wahl des Umschlingungswinkels $\alpha$ und der Kontaktlänge eines Umschlingungsmittels 4 an zumindest einer unrunden Zugmittelscheibe 2 und/oder 3 besonders vorteilhaft Einfluss auf das Schwingungsverhalten des Umschlingungsmittels 4 und demgemäß des Umschlingungstriebes 1 als Systemeinheit genommen werden kann.

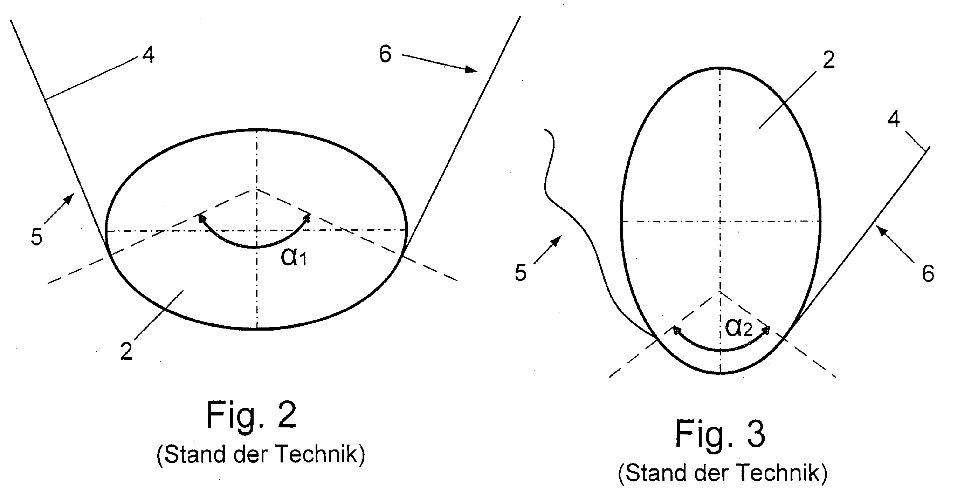

Die Figuren 2 und 3 zeigen jeweils eine unrunde, beispielsweise mit der antreibenden Kurbelwelle der Verbrennungskraftmaschine wirkverbundene Zugmittelscheibe 2 zweiter Ordnung (Ellipsenform) eines herkömmlichen Umschlingungstriebes 1, mit einem die Zugmittelscheibe 2 umschlingenden Umschlingungsmittel 4 in zwei repräsentativen Drehstellungen, wobei vorliegend die Zugmittelscheibe 2 im Uhrzeigersinn drehend gezeigt ist.

Wie der Zeichnung unschwer zu entnehmen ist, sind in den beiden gezeigten Drehzuständen der Zugmittelscheibe 2 derartige Umschlingungswinkel $\alpha_1$ und $\alpha_2$ eingestellt, dass unterschiedliche Umschlingungsbogenlängen bzw. Kontaktlängen des Umschlingungsmittels bewirkt werden, die ihrerseits wiederum schwankende Längen des Umschlingungsmittels 4 insbesondere im Leertrum 5 des Umschlingungstriebes 1 hervorrufen, wogegen die Spannung im Zugtrum 6 desselben weitgehend konstant bleibt. Diese schwankenden Längenänderungen im Leertrum 5 sind die Ursache für nachteilige Vibrationen.

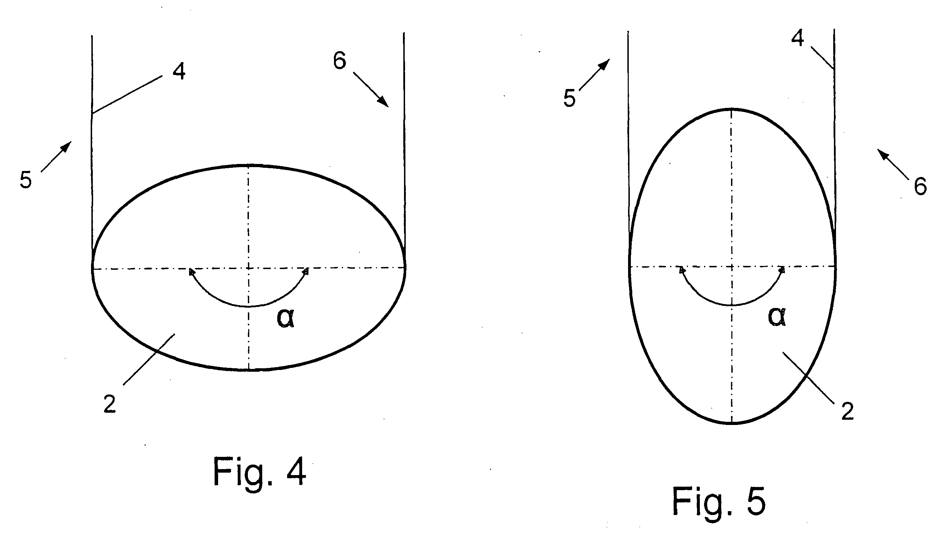

Um diesem Umstand zu begegnen, sind der Umschlingungswinkel $\alpha$ und die Kontaktlänge des Umschlingungsmittels an der zumindest einen unrund ausgebildeten Zugmittelscheibe 2 derart eingestellt, dass diese in jeder Drehstellung der Zugmittelscheibe 2 nahezu konstant sind. So zeigen die Figuren 4 und 5 die Zugmittelscheibe 2 mit dem dieselbe umschlingenden Umschlingungsmittel 4 in zwei  repräsentativen Drehstellungen.

Danach ist für Zugmittelscheibe 2 zweiter Ordnung (Ellipsenform) ein definierter Umschlingungswinkel von $\alpha$ = 180° eingestellt, der seinerseits dazu führt, dass in jeder Drehstellung der Zugmittelscheibe 2 zum einen ein konstanter Umschlingungswinkel $\alpha$ mit konstanter Kontaktlänge des Umschlingungsmittels vorliegt, und zum anderen ein weitestgehend konstant straffes Umschlingungsmittel 4 sowohl im Leertrum 5 als auch im Zugtrum 6 realisiert ist. Nachteilige Vibrationen im Umschlingungsmittel 4 sind somit vorteilhaft vermieden.

Die Erfindung bezieht sich jedoch nicht auf die vorstehend gezeigte und ausführlich beschriebene Zugmittelscheibe 2 zweiter Ordnung, sondern umfasst unrund geformte Zugmittelscheiben der dritten, vierten, fünften und sechsten Ordnung, deren Ausführungsformen hier nicht näher dargestellt sind.

Im Rahmen der genannten Untersuchungen hat sich beispielsweise für eine an sich bekannte Zugmittelscheibe 2 dritter Ordnung (Dreieckform) ein Umschlingungswinkel von $\alpha$=120° als besonders vorteilhaft erwiesen. Demgegenüber kann auch ein ganzzahliges Vielfaches dieses Umschlingungswinkels $\alpha$ eingestellt werden, demgemäß $\alpha$=240°. Jedoch wird einem Umschlingungswinkel von $\alpha$=120° der Vorzug gegeben, da bei einem eingestellten Umschlingungswinkel von $\alpha$=240° in diesem konkreten Fall eine reduzierte Wirksamkeit zu verzeichnen war.

Für einen Umschlingungstrieb 1 mit einer Zugmittelscheibe 2 vierter Ordnung (Viereckform) hat sich ein Umschlingungswinkel von $\alpha$=90° oder einem ganzzahligen Vielfachen desselben, vorzugsweise ein Umschlingungswinkel von $\alpha$=180° bewährt.

Findet eine Zugmittelscheibe 2 fünfter Ordnung (Fünfeckform) Anwendung, wird ein Umschlingungswinkel von $\alpha$=72° oder einem ganzzahligen Vielfachen desselben, vorzugsweise ein Umschlingungswinkel von $\alpha$=144° favorisiert.

Bei einer Zugmittelscheibe 2 sechster Ordnung (Sechseckform) bietet sich ein Umschlingungswinkel von $\alpha$ = 60° oder einem ganzzahligen Vielfachen desselben an, vorzugsweise jedoch ein Umschlingungswinkel von $\alpha$ = 120°.

Besonders komfortabel lässt sich der jeweilige optimale Umschlingungswinkel $\alpha$ für die jeweils gewählte Zugmittelscheibe 2, demgemäß auch bis zur n-ten Ordnung nach der Bedingung

$$\alpha = 360° / OZ$$

ermitteln, wobei der Begriff OZ für die Ordnungszahl der verwendeten unrunden Zugmittelscheibe 2 beziehungsweise für eine Zugmittelscheibe 2 zweiter, dritter, vierter oder n-ter Ordnung steht.

Die Einstellung des jeweiligen Umschlingungswinkels $\alpha$ und der genannten Kontaktlänge des Umschlingungsmittels erfolgt zweckmäßigerweise über ein bestimmtes Größenverhältnis der beteiligten Zugmittelscheiben 2, 3 und/oder durch die Wahl der Beabstandung derselben voneinander, und/oder mittels nicht näher gezeigter, jedoch an sich bekannter Hilfsmittel, wie beispielsweise Umlenkscheiben, Umlenkrollen oder Führungsschienen.

Möglich ist es des Weiteren, neben der Zugmittelscheibe 2 auch die Zugmittelscheibe 3 gemäß der obern genannten Bedingungen auszubilden, welches sich insbesondere für einen Umschlingungstrieb 1 anbietet, der die Kurbelwelle mit der Nockenwelle einer Verbrennungskraftmaschine verbindet (nicht näher dargestellt).

Zwar besteht die Möglichkeit, einen vermeintlich optimalen Umschlingungswinkel $\alpha$ für jede gewählte Zugmittelscheibe 2, 3 gemäß obiger Bedingung rechnerisch zu ermitteln, jedoch hat sich in Versuchen, einen Umschlingungstrieb 1 für eine Verbrennungskraftmaschine betreffend, gezeigt, dass Zugmittelscheiben 2 und 3 beliebiger Ordnung nicht wahllos miteinander kombiniert werden können, um den gewünschten Effekt einer größtmöglichen Schwingungsreduzierung zu erzielen.

Danach wurde z. B. gefunden, dass für einen Umschlingungstrieb 1, welcher die Kurbelwelle mit der Nockenwelle einer Drei-Zylinder-Verbrennungsmaschine verbindet, die besten Ergebnisse dann erzielt wurden, wenn die Zugmittelscheibe der Nockenwelle 3 als Zugmittelscheibe 3 dritter Ordnung (Dreieckform) mit einem Umschlingungswinkel von $\alpha$ = 120° oder einem ganzzahligen Vielfachen desselben, vorzugsweise jedoch mit einem Umschlingungswinkel von $\alpha$ = 120°, und die Zugmittelscheibe der Kurbelwelle 2 kreisförmig ausgebildet sind (nicht näher gezeigt).

Weitere besonders vorteilhafte Ausgestaltungsvarianten des Umschlingungstriebes 1 neben der bereits vorstehend beschriebenen sind der Einfachheit halber nachfolgend in Abhängigkeit von der Anzahl der Zylinder einer Verbrennungskraftmaschine, nämlich für eine Vier-, Fünf- und Sechs-Zylinder-Verbrennungskraftmaschine, in tabellarischer Form dargestellt. Die in runden Klammern gesetzten Werte stellen dabei den jeweils rechnerisch ermittelten Umschlingungswinkel $\alpha$ dar, der jedoch vorliegend nicht favorisiert wird.

| Anzahl der Zylinder einer Verbrennungskraftmaschine | Ausgestaltung des Umschlingungstriebes 1 [alternativ] | |
|---|---|---|
| | Zugmittelscheibe 3 <u>Nockenwelle</u> | Zugmittelscheibe 2 <u>Kurbelwelle</u> |
| 3 | 3. Ordnung (Dreieckform) $\alpha$ = 120° | Kreisform |
| 4 | 4. Ordnung | 2. Ordnung |
| | (Viereckform) $\alpha$ = 180° (90°) | (Ellipsenform) $\alpha$ = 180° |
| 5 | 5. Ordnung (Fünfeckform) $\alpha$ = 144° (72°) | Kreisform |
| 6 | 6. Ordnung (Sechseckform) $\alpha$ = 120° (60°) | 3. Ordnung (Dreieckform) $\alpha$ = 120° |

**Bezugszeichen**

| 1 | Umschlingungstrieb |
|---|---|
| 2 | Zugmittelscheibe bzw. Zugmittelscheibe der Kurbelwelle |
| 3 | Zugmittelscheibe bzw. Zugmittelscheibe der Nockenwelle |
| 4 | Umschlingungsmittel |
| 5 | Leertrum |
| 6 | Zugtrum |
| $\alpha$, $\alpha_1$, $\alpha_2$ | Umschlingungswinkel |

**Patentansprüche**

1. Umschlingungstrieb (1), mit einem Umschlingungsmittel (4), zumindest einer antreibenden Zugmittelscheibe (2) und einer angetriebenen Zugmittelscheibe (3), wobei zumindest eine der Zugmittelscheiben (2, 3) unrund ausgebildet ist und wobei der Umschlingungswinkel und die Kontaktlänge des Umschlingungsmittels (4) an der unrunden Zugmittelscheibe (2, 3) derart eingestellt sind, dass diese in jeder Drehstellung der unrunden Zugmittelscheibe (2, 3) nahezu konstant sind, **dadurch gekennzeichnet, dass** die unrunde Zugmittelscheibe (2, 3) als Zugmittelscheibe

   - dritter Ordnung mit einem Umschlingungswinkel $\alpha$=120° oder einem ganzzahligen Vielfachen desselben;
   - vierter Ordnung mit einem Umschlingungswinkel $\alpha$=90° oder einem ganzzahligen Vielfachen desselben;
   - fünfter Ordnung mit einem Umschlingungswinkel $\alpha$=72° oder einem ganzzahligen Vielfachen desselben;

   oder

   - sechster Ordnung mit einem Umschlingungswinkel $\alpha$=60° oder einem ganzzahligen Vielfachen desselben

   ausgebildet ist.

2. Umschlingungstrieb nach Anspruch 1, **dadurch gekennzeichnet, dass** der Umschlingungswinkel der Zugmittelscheibe (2, 3) vierter Ordnung $\alpha$=180° ist.

3. Umschlingungstrieb nach Anspruch 1, **dadurch gekennzeichnet, dass** der Umschlingungswinkel der Zugmittelscheibe (2, 3) fünfter Ordnung $\alpha$=144° ist.

4. Umschlingungstrieb nach Anspruch 1, **dadurch gekennzeichnet, dass** der Umschlingungswinkel der Zugmittelscheibe (2, 3) sechster Ordnung $\alpha$=120° ist.

5. Umschlingungstrieb nach Anspruch 1, **dadurch gekennzeichnet, dass** der Umschlingungstrieb die Kurbelwelle mit der Nockenwelle einer Drei-Zylinder-Verbrennungskraftmaschine verbindet, wobei die Zugmittelscheibe (3) der Nockenwelle als Zugmittelscheibe (3) dritter Ordnung mit einem Umschlingungswinkel $\alpha$=120° oder einem ganzzahligen Vielfachen desselben unrund ausgebildet ist und wobei die Zugmittelscheibe (2) der Kurbelwelle kreisförmig ausgebildet ist.

6. Umschlingungstrieb nach Anspruch 1, **dadurch gekennzeichnet, dass** der Umschlingungstrieb die Kurbelwelle mit der Nockenwelle einer Fünf-Zylinder-Verbrennungskraftmaschine verbindet, wobei die Zugmittelscheibe (3) der Nockenwelle als Zugmittelscheibe (3) fünfter Ordnung mit einem Umschlingungswinkel $\alpha$=72° oder einem ganzzahligen Vielfachen desselben unrund ausgebildet ist und wobei die Zugmittelscheibe (2) der Kurbelwelle kreisförmig ausgebildet ist.

7. Umschlingungstrieb nach Anspruch 1, **dadurch gekennzeichnet, dass** der Umschlingungstrieb die Kurbelwelle mit der Nockenwelle einer Sechs-Zylinder-Verbrennungskraftmaschine verbindet, wobei die Zugmittelscheibe (3) der Nockenwelle als Zugmittelscheibe (3) sechster Ordnung mit einem Umschlingungswinkel $\alpha$=60° oder einem ganzzahligen Vielfachen desselben unrund ausgebildet ist oder wobei die Zugmittelscheibe (2) der Kurbelwelle als Zugmittelscheibe (2) dritter Ordnung mit einem Umschlingungswinkel $\alpha$=120° oder einem ganzzahligen Vielfachen desselben unrund ausgebildet ist.

**EP 1 902 233 B1**

**Claims**

1. Continuous belt drive (1), with a loop-around means (4), with at least one driving traction pulley (2) and with a driven traction pulley (3), at least one of the traction pulleys (2, 3) being of non-round form, and the loop-around angle and the contact length of the loop-around means (4) on the non-round traction pulley (2, 3) being set in such a way that these are virtually constant in any rotary position of the non-round traction pulley (2, 3), **characterized in that** the non-round traction pulley (2, 3) is designed as a traction pulley

   - of third order with a loop-around angle $\alpha$ = 120° or an integral multiple thereof;
   - of fourth order with a loop-around angle $\alpha$ = 90° or an integral multiple thereof;
   - of fifth order with a loop-around angle $\alpha$ = 72° or an integral multiple thereof;

   or

   - of sixth order with a loop-around angle $\alpha$ = 60° or an integral multiple thereof.

2. Continuous belt drive according to Claim 1, **characterized in that** the loop-around angle of the traction pulley (2, 3) is of fourth order $\alpha$ = 180°.

3. Continuous belt drive according to Claim 1, **characterized in that** the loop-around angle of the traction pulley (2, 3) is of fifth order $\alpha$ = 144°.

4. Continuous belt drive according to Claim 1, **characterized in that** the loop-around angle of the traction pulley (2, 3) is of sixth order $\alpha$ = 120°.

5. Continuous belt drive according to Claim 1, **characterized in that** the continuous belt drive connects the crankshaft to the camshaft of a three-cylinder internal combustion engine, the traction pulley (3) of the camshaft being of non-round design as a traction pulley (3) of third order with a loop-around angle $\alpha$ = 120° or an integral multiple thereof, and the traction pulley (2) of the crankshaft being of circular design.

6. Continuous belt drive according to Claim 1, **characterized in that** the continuous belt drive connects the crankshaft to the camshaft of a five-cylinder internal combustion engine, the traction pulley (3) of the camshaft being of non-round design as a traction pulley (3) of fifth order with a loop-around angle $\alpha$ = 72° or an integral multiple thereof, and the traction pulley (2) of the crankshaft being of circular design.

7. Continuous belt drive according to Claim 1, **characterized in that** the continuous belt drive connects the crankshaft to the camshaft of a six-cylinder internal combustion engine, the traction pulley (3) of the camshaft being of non-round design as a traction pulley (3) of sixth order with a loop-around angle $\alpha$ = 50° or an integral multiple thereof, or the traction pulley (2) of the crankshaft being of non-round design as a traction pulley (2) of third order with a loop-around angle $\alpha$ = 120° or an integral multiple thereof.

**Revendications**

1. Mécanisme d'entraînement à enroulement (1), comprenant un moyen enroulé (4), au moins une poulie de moyen de traction (2) d'entraînement et une poulie de moyen de traction (3) entraînée, au moins l'une des poulies de moyen de traction (2, 3) étant non circulaire, et l'angle de contact et la longueur de contact du moyen enroulé (4) étant ajustés à la poulie de moyen de traction (2, 3) non circulaire de telle sorte que ceux-ci soient presque constants dans chaque position angulaire de la poulie de moyen de traction (2, 3) non circulaire, **caractérisé en ce que** la poulie de moyen de traction (2, 3) non circulaire est réalisée sous forme de poulie de moyen de traction

   - de troisième ordre présentant un angle de contact $\alpha$=120° ou un multiple entier de celui-ci,
   - de quatrième ordre présentant un angle de contact $\alpha$=90° ou un multiple entier de celui-ci,
   - de cinquième ordre présentant un angle de contact $\alpha$=72° ou un multiple entier de celui-ci, ou
   - de sixième ordre présentant un angle de contact $\alpha$=60° ou un multiple entier de celui-ci.

2. Mécanisme d'entraînement à enroulement selon la revendication 1, **caractérisé en ce que** l'angle de contact de la poulie de moyen de traction (2, 3) de quatrième ordre est $\alpha$=180°.

7

**3.** Mécanisme d'entraînement à enroulement selon la revendication 1, **caractérisé en ce que** l'angle de contact de la poulie de moyen de traction (2, 3) de cinquième ordre est $\alpha$=144°.

**4.** Mécanisme d'entraînement à enroulement selon la revendication 1, **caractérisé en ce que** l'angle de contact de la poulie de moyen de traction (2, 3) de sixième ordre est $\alpha$=120°.

**5.** Mécanisme d'entraînement à enroulement selon la revendication 1, **caractérisé en ce que** le mécanisme d'entraînement à enroulement relie le vilebrequin à l'arbre à cames d'un moteur à combustion interne à trois cylindres, la poulie de moyen de traction (3) de l'arbre à cames étant réalisée de manière non circulaire sous forme de poulie de moyen de traction (3) de troisième ordre présentant un angle de contact $\alpha$=120° ou un multiple entier de celui-ci, et la poulie de moyen de traction (2) du vilebrequin étant circulaire.

**6.** Mécanisme d'entraînement à enroulement selon la revendication 1, **caractérisé en ce que** le mécanisme d'entraînement à enroulement relie le vilebrequin à l'arbre à cames d'un moteur à combustion interne à cinq cylindres, la poulie de moyen de traction (3) de l'arbre à cames étant réalisée de manière non circulaire sous forme de poulie de moyen de traction (3) de cinquième ordre présentant un angle de contact $\alpha$=72° ou un multiple entier de celui-ci, et la poulie de moyen de traction (2) du vilebrequin étant circulaire.

**7.** Mécanisme d'entraînement à enroulement selon la revendication 1, **caractérisé en ce que** le mécanisme d'entraînement à enroulement relie le vilebrequin à l'arbre à cames d'un moteur à combustion interne à six cylindres, la poulie de moyen de traction (3) de l'arbre à cames étant réalisée de manière non circulaire sous forme de poulie de moyen de traction (3) de sixième ordre présentant un angle de contact $\alpha$=60° ou un multiple entier de celui-ci ou la poulie de moyen de traction (2) du vilebrequin étant réalisée de manière non circulaire sous forme de poulie de moyen de traction (2) de troisième ordre présentant une angle de contact $\alpha$=120° ou un multiple entier de celui-ci.

Fig. 1

Fig. 2
(Stand der Technik)

Fig. 3
(Stand der Technik)

EP 1 902 233 B1

Fig. 4

Fig. 5

EP 1 902 233 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19520508 A1
- DE 20220367 U1
- DE 102004025936
- US 4865577 A
- US 596289 A